# EUROPÄISCHE PATENTSCHRIFT

(11) **EP 2 559 672 B1**
(45) Veröffentlichungstag und Bekanntmachung des Hinweises auf die Patenterteilung: **10.06.2015**
(21) Anmeldenummer: 12190740.6
(22) Anmeldetag: 06.08.2010
(51) Int. Cl.: C03C 17/36, F24C 15/10, G06F 3/044, H05B 6/12

(54) **Hausgeräte-Abdeckplatte mit Fabry-Perot Interferenzschicht**
Cover plate for a domestic appliance, said cover plate comprising a fabry-perot interference layer
Plaque de recouvrement d'appareils ménagers avec couche d'interférence Fabry-Perot

(30) Priorität: 17.08.2009 EP 09382146; 18.08.2009 ES 200930605
(43) Veröffentlichungstag der Anmeldung: 20.02.2013
(62) Teilanmeldung aus: 10739373.8
(73) Patentinhaber: BSH Hausgeräte GmbH, 81739 München (DE)
(72) Erfinder: Alonso Esteban, Rafael, 22004 Huesca (ES); Buñuel Magdalena, Miguel Angel, 50017 Zaragoza (ES); Garcia Jimenez, Jose Ramon, 86316 Friedberg (DE); Mairal Serrano, Carlos Vicente, 50015 Zaragoza (ES); Pelayo Zueco, Francisco Javier, 50008 Zaragoza (ES); Sanchez Serrano, Ana Carmen, 50018 Zaragoza (ES); Subias Domingo, Jesus Mario, 50008 Zaragoza (ES); Villuendas Yuste, Francisco, 50009 Zaragoza (ES)

(56) Entgegenhaltungen:
- WO-A1-00/73984
- WO-A2-2007/025872
- US-A1- 2007 295 711
- US-A1- 2008 190 409
- US-A1- 2008 264 931

## Beschreibung

Die Erfindung betrifft eine Hausgeräte-Abdeckplatte mit einer Trägerplatte aus Glas oder Glaskeramik mit wenigstens einem zumindest teilweise transparenten Bereich zum Abdecken eines Anzeigeelements sowie mit einer Beschichtung. Ein weiterer Aspekt der Erfindung betrifft ein Verfahren zum Herstellen einer solchen Hausgeräte-Abdeckplatte.

Aus der WO 2007/118744 A1 ist eine Hausgeräte-Abdeckplatte mit einer metallartigen Schicht bekannt. Die metallartige Schicht überdeckt auf die Rückseite der Abdeckplatte aufgedruckte Dekorabschnitte, um diese zu schützen.

Ferner ist aus der DE 100 14 373 C2 ein Kochfeld mit einer Glaskeramikplatte bekannt, die eine metallartige Beschichtung aufweist. Solche metallartigen Beschichtungen sind ästhetisch sehr ansprechend, eröffnen neue Möglichkeiten für das Hausgerätedesign und erlauben insbesondere ein metallisches Aussehen von Glaskeramik-Abdeckplatten, wodurch diese in ihrem Gesamteindruck an Metallteile des Hausgeräts angepasst werden können. Beispielsweise kann im Falle eines Kochfelds eine Glaskeramikabdeckplatte in einem Edelstahl-Look ermöglicht werden, die sich besonders harmonisch in eine Küche mit Edelstahl-Bauteilen einfügt.

Aus der US 2008/0264931 A1 ist eine Abdeckplatte für ein Kochfeld bekannt, die mit einer semitransparenten Metallschicht beschichtet ist. Die semitransparente Metallschicht kann zusätzlich zu einer Farbschicht zum Erzeugen eines metallischen Glanzes aufgebracht werden.

Weiterhin offenbart die US 2008/0264931 A1 eine transparente oder durchscheinende Glaskeramikplatte sowie ein Verfahren zu ihrer Herstellung.

Die US 2007/0295711 A1 offenbart ein Kochoberteil mit einer Glaskeramikplatte, die eine durchscheinende Beschichtung und eine verbesserte Fensterbeschichtung in einem Anzeigefenster an einer Unterseite der Platte aufweist,

Die US 2008/0190409 A1 offenbart eine Glaskeramikplatte und ein Verfahren zu ihrer Herstellung.

Der Erfindung liegt insbesondere die Aufgabe zugrunde, die Gestaltungsmöglichkeiten gattungsgemäßer Abdeckplatten zu erweitern. Eine weitere Aufgabe der Erfindung ist es, ein Verfahren zum Herstellen einer solchen Abdeckplatte bereitzustellen.

Diese Aufgaben werden insbesondere durch eine Hausgeräte-Abdeckplatte nach dem Anspruch 1 und durch ein Verfahren nach dem Anspruch 14 gelöst. Weitere vorteilhafte Ausgestaltungen und Weiterbildungen der Erfindung ergeben sich aus den Unteransprüchen.

Die Erfindung geht insbesondere aus von einer Hausgeräte-Abdeckplatte mit einer Trägerplatte aus Glas oder Glaskeramik mit wenigstens einem zumindest teilweise transparenten Bereich zum Abdecken eines Anzeigeelements sowie mit einer Beschichtung.

Es wird vorgeschlagen, dass die Beschichtung zumindest eine semitransparente metallische Schicht mit einer Schichtdicke zwischen 10 nm und 50 nm und zumindest eine weitere metallische Schicht umfasst, die durch eine dielektrische Schicht von der semitransparenten metallischen Schicht getrennt ist. In dem genannten Bereich von Schichtdicken ist die Beschichtung einerseits hinreichend transparent um das Durchscheinen von leuchtenden Elementen, wie beispielsweise Anzeigeelementen wie Leuchtdioden oder 7 -Segment -Anzeigen, zu erlauben, und im Übrigen, insbesondere bei ausgeschaltetem Anzeigeelement, eine metallisch reflektierende Oberfläche zu erzeugen. Für Schichtdicken unterhalb von 10 nm ergibt sich eine zu starke Transparenz, die die Beschichtung nicht mehr metallisch erscheinen lässt, während bei Schichtdicken oberhalb von 50 nm die Transparenz nicht mehr ausreichend ist, um das Durchscheinen von Anzeigeelementen und/oder rötlich leuchtenden Heizelementen zu ermöglichen. Besonders vorteilhaft ist eine Transmission von 30 % - 80 % für rotes Licht mit einer Wellenlänge von 700 - 800 nm. Durch das Vorsehen einer weiteren metallischen Schicht kann von der semitransparenten Schicht durchgelassenes Licht reflektiert werden und in der dielektrischen Schicht mit dem durchgelassenen Licht interferieren. Dadurch wird eine besonders eindrucksvolle, schillernde Oberfläche erzeugt, die neue Möglichkeiten für das Design eröffnet. Die Dicke der dielektrischen Schicht kann insbesondere weniger als 800 nm betragen. Dadurch liegt die Schichtdicke im Bereich von sichtbarem Licht, was zu interessanten Interferenzeffekten zwischen den Lichtanteilen führt, die von den unterschiedlichen metallischen Schichten reflektiert werden. Die Interferenzeffekte können zum Erzeugen einer irisierend schimmernden Oberfläche genutzt werden und/oder so gewählt werden, dass bestimmte Farbanteile absorbiert werden und dass das reflektierte Licht eine bestimmte Farbe annimmt. Dazu können insbesondere auch Abstände von weniger als 500 nm gewählt werden.

Die erfindungsgemäße Hausgeräte-Abdeckplatte ist in vielen unterschiedlichen Bereichen einsetzbar. Beispielsweise kann die Abdeckplatte als Kochfeld-Abdeckplatte eines Kochfelds, insbesondere eines Induktionskochfelds oder Strahlungskochfelds, oder als Frontplatte einer Hausgerätetür, beispielsweise eines Backofens, Mikrowellenherds oder Dampfgarers, eingesetzt werden. Ferner ist ein Einsatz in Kühlschränken, Spülmaschinen, Waschmaschinen und Wäschetrocknern denkbar. Die Vorteile der Erfindung kommen insbesondere dann zum Tragen, wenn hinter der Abdeckplatte neben Anzeigeelementen auch Berührungssensoren angeordnet sind, die eine Benutzerschnittstelle eines Hausgeräts bilden. Der metallische Look kann dann derart perfektioniert werden, dass die Benutzerschnittstelle im inaktiven Zustand des Hausgeräts beinahe vollständig hinter der spiegelnden Metallschicht verschwindet. Im aktiven Zustand des Hausgeräts können Leuchtelemente der Benutzerschnittstelle aktiviert werden, die dann durch die teilweise transparente metallische Schicht hindurch scheinen.

Eine kapazitive Berührungssensorik ist ermöglicht, und wenigstens eine der metallischen Schichten weist in der Umgebung eines Bereichs zur Abdeckung eines Berührungssensors zur elektrischen Isolation des Bereichs eine Unterbrechung auf. Der Berührungssensor wird dann nicht durch die gesamte, als großflächige Elektrode wirkende Beschichtung abgeschirmt, sondern nur durch einen kleinen, durch die insbesondere linienförmige Unterbrechung definierten und isolierten Bereich der Beschichtung, die in einer Umgebung des Berührungssensors auch vollständig fehlen kann. Durch die Unterbrechung kann auch eine Abschirmung von induktiven Sensoren durch die Beschichtung vermieden werden.

Eine Beschädigung oder Korrosion der metallischen Schicht kann vermieden werden, wenn diese auf eine dem Anzeigeelement zugewandte Rückseite der Trägerplatte aufgebracht ist und/oder wenn diese von einer dielektrischen Schutzschicht bedeckt ist.

Besonders interessante Effekte können erreicht werden, wenn die Abdeckplatte wenigstens zwei zumindest teilweise transparente metallische Schichten umfasst, deren Schichtdicke insbesondere in dem oben genannten Bereich von 10 nm bis 50 nm liegen kann. Diese können durch eine dielektrische Schicht voneinander getrennt sein, deren Dicke insbesondere zwischen 5 nm und 500 nm, vorzugsweise zwischen 10 nm und 100 nm, liegen kann.

Eine Störung des metallischen Gesamteindrucks durch großflächige, schwarz erscheinende Fenster kann vermieden werden, wenn die metallische Schicht entlang von Linien mit einer Breite von weniger als 2 mm, insbesondere von weniger als 0,2 mm, unterbrochen ist. Die Unterbrechung kann insbesondere durch Einritzen der metallischen Schicht hergestellt sein. Dazu kann das metallische Material beispielsweise zur Herstellung der Unterbrechung von einem Laser abgetragen werden. So sind auch Unterbrechungen mit einer Breite von weniger als 1 mm einfach und kostengünstig realisierbar.

Weitere Gestaltungsmöglichkeiten können eröffnet werden, wenn die Hausgeräte-Abdeckplatte eine zumindest in Teilbereichen auf die Trägerplatte aufgedruckte Markierungsschicht umfasst. Die Markierungsschicht kann insbesondere in einem Siebdruckverfahren oder in einem Tintenstrahl-Druckverfahren auf die Rückseite der Trägerplatte aufgedruckt sein. In einer besonders vorteilhaften Ausgestaltung der Erfindung werden eine oder beide metallischen Schichten nach dem Aufdrucken der Markierungsschicht auf die Trägerplatte aufgebracht.

Die metallische Schicht kann als Leiterbahn und/oder Kontrollelektrode verwendet werden, wenn die Hausgeräte-Abdeckplatte wenigstens eine mit der metallischen Schicht verbundene Kontaktelektrode zum Einspeisen von Steuersignalen in die metallische Schicht umfasst.

Metallische Schichten mit einer präzise definierten Schichtdicke können beispielsweise durch eine physikalische Gasphasenabscheidung (englisch: Physical Vapor Deposition, kurz: PVD) hergestellt werden. Das Verfahren ist insbesondere durch eine Gaserzeugung der schichtbildenden Teilchen, den Transport des Dampfes zum Substrat und die Kondensation des Dampfes auf dem Substrat zur Schichtbildung gekennzeichnet. Als Metallmaterialien für die metallische Schicht kann Eisen, Stahl, Kupfer oder eine geeignete Legierung wie Silicium mit Aluminium gewählt werden. Zwischen der Trägerplatte und der Metallschicht kann eine Schicht aus Siliciumdioxid vorgesehen sein, die auch durch eine natürliche Oxidation der Oberfläche der Trägerplatte entstehen kann.

Die Gestaltungsfreiheit kann weiter verbessert werden, wenn die Trägerplatte und/oder die Beschichtung einer Laser-Innengravur umfasst.

Ein weiterer Korrosionsschutz kann erreicht werden, wenn zumindest eine äußere Schicht der metallischen Schichten von einer dielektrischen Schutzschicht bedeckt ist.

In denkbaren Ausgestaltungen ist zumindest eine der metallischen Schichten aus einem Material hergestellt, welches aus der Gruppe, die aus Silber (Ag), Gold (Au), Aluminium (AI), Molybdän (Mo), Kupfer (Cu), Nickel (Ni), Silizium (Si), Edelstahl (SSt), Titan (Ti), Niob (Nb), Tantal (Ta), Wolfram (W), Palladium oder einer Legierung oder Mischung aus zwei oder mehreren dieser Metalle besteht, ausgewählt ist.

Eine schwarz schimmernde Schicht kann erreicht werden, wenn eine Ni-Cr Legierung mit 80 % Nickel und 20 % Chrom verwendet wird.

Als Material wenigstens einer der dielektrischen Trennschichten haben sich Oxide, welche aus der Gruppe, die aus Zinnoxiden, Zinkoxiden, Aluminiumoxiden, Titanoxiden, Siliziumoxiden, Nickeloxiden, Chromoxiden, Nioboxiden, Tantaloxiden oder Mischungen davon besteht, ausgewählt sind, und/oder Nitride aus metallischen Elementen, welche aus der Gruppe, die aus Siliziumnitriden, Titannitdriden, Chromnitriden und Aluminiumnitriden oder Mischungen davon besteht, ausgewählt sind, als vorteilhaft erwiesen.

Ein weiterer Aspekt der Erfindung betrifft ein Verfahren zum Herstellen einer Abdeckplatte der oben beschriebenen Art.

Weitere Vorteile und Merkmale der Erfindung ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:
- Fig. 1: ein Kochfeld mit einer Abdeckplatte, einem Anzeigeelement und mehreren Bedienelementen in einer Draufsicht,
- Fig. 2: eine schematische Schnittdarstellung der Abdeckplatte nach Fig. 1,
- Fig. 3: eine Hausgeräte-Abdeckplatte nach einer weiteren Ausgestaltung der Erfindung mit zwei metallischen Schichten,
- Fig. 4: eine Hausgeräte-Abdeckplatte nach einer weiteren Ausgestaltung der Erfindung mit drei metallischen Schichten, und
- Fig. 5: eine Schnittdarstellung einer Hausgeräte-Abdeckplatte nach einer weiteren Ausgestaltung der Erfindung mit Laser-Innengravuren.

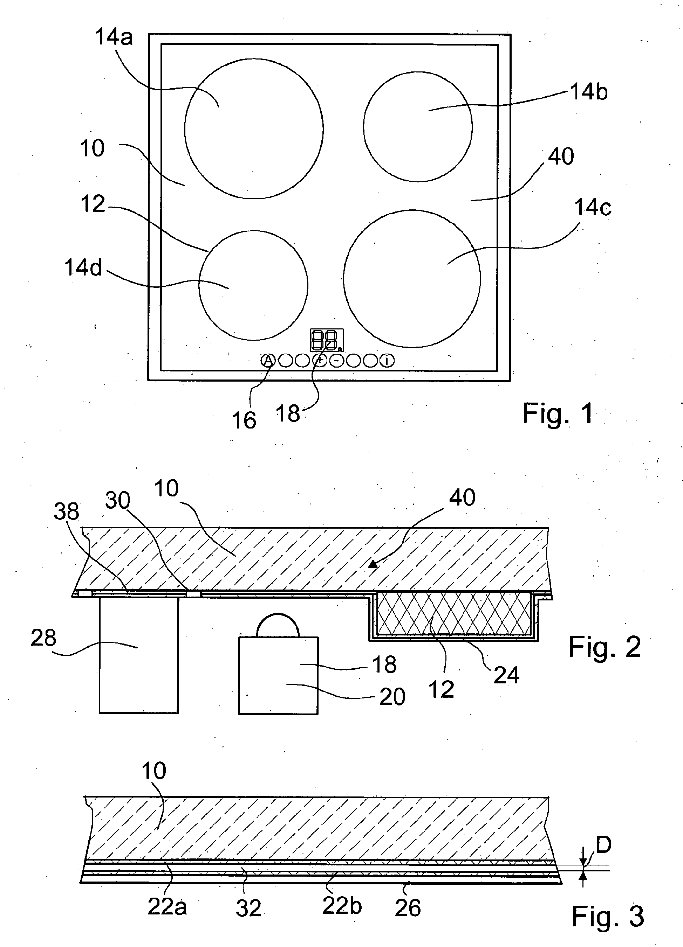

Fig. 1 zeigt ein Kochfeld mit einer Abdeckplatte, die eine gedruckte Trägerplatte 10 aus Glas oder Glaskeramik umfasst. Auf die der Sichtseite der Trägerplatte 10 abgewandte Rückseite der Trägerplatte 10 sind verschiedene Markierungen 12 aufgedruckt, die durch das Glaskeramikmaterial der Trägerplatte 10 hindurch sichtbar sind.

Die Markierungen 12 sind in einem Siebdruckverfahren aufgebracht und markieren in einer an sich bekannten Weise Heizzonen 14a bis 14d des Kochfelds sowie die Elemente einer Benutzerschnittstelle 16.

Die Benutzerschnittstelle 16 umfasst ein hier vereinfacht als 7-Segment-Anzeige dargestelltes Anzeigeelement 18 mit mehreren Leuchtdioden 20 (Fig. 2). Nach dem Aufdrucken der Markierungen 12 wurde in einem Herstellungsverfahren zum Herstellen der erfindungsgemäßen Hausgeräte-Abdeckplatte eine Beschichtung 24 auf die Rückseite der Trägerplatte 10 aufgebracht, die mehrere metallische Schichten 22a - 22c (Fig. 3) umfasst, deren Schichtdicke zwischen 10 nm und 50 nm liegt. In dem in Fig. 1 dargestellten Ausführungsbeispiel umfasst die Beschichtung 24 (Fig. 2) eine Edelstahlschicht und eine Kupferschicht, die durch physikalische Gasphasenabscheidung erzeugt wurden.

Fig. 2 zeigt eine Schnittdarstellung der Abdeckplatte aus Fig. 1. Die Schnittdarstellung ist stark schematisiert. Insbesondere die Größenverhältnisse sind stark verzerrt. Die Trägerplatte 10 ist an ihrer Rückseite mit einer serigraphisch hergestellten Markierung 12 bedruckt und anschließend mit einer Beschichtung 24 beschichtet, die in einem Sputter- oder PVD-Verfahren hergestellt wurde.

Figur 3 zeigt eine Schnittdarstellung des Schichtaufbaus der Beschichtung 24. Auf eine hier nicht dargestellte Siliciumdioxid-Schicht auf der Rückseite des Substrats der Trägerplatte 10 ist zunächst eine erste metallische Schicht 22a aus Eisen/Edelstahl, dann eine dielektrische Trennschicht 32 mit einer Dicke D zwischen 10 und 100 nm und anschließend eine zweite metallische Schicht 22b aus Kupfer aufgebracht, die durch eine dielektrische Schutzschicht 26 vor Beschädigungen geschützt ist. Die Dicke der metallischen Schichten 22a, 22b liegt zwischen 10 nm und 50 nm, vorzugsweise zwischen 20 nm und 40 nm, während die Dicke der Schutzschicht 26 mehrere 100 nm beträgt.

Hinter der Abdeckplatte bzw. der Trägerplatte 10 ist eine Leuchtdiode 20 (Fig. 2) des Anzeigeelements 18 angeordnet, deren Licht durch die metallischen Schichten 22a, 22b, die Trennschicht 32, die Schutzschicht 26 und die Trägerplatte 10 hindurch von der Sichtseite der Trägerplatte 10 aus wahrnehmbar ist.

Da die metallischen Schichten 22a, 22b nach der Markierung 12 auf die Trägerplatte 10 aufgebracht sind, überdecken die metallischen Schichten 22a, 22b von der Rückseite der Trägerplatte 10 aus betrachtet auch die Markierung 12. Eine der metallischen Schichten 22a, 22b und/oder die Trennschicht 23 können alternativ Aussparungen aufweisen, die beispielsweise mit einer Maske aufgebracht werden können. Dadurch können diese Schichten die Funktion der Markierung 12 übernehmen, die dann entfallen kann.

Die metallischen Schichten 22a, 22b ist entlang einer linienförmigen Unterbrechung 30 durch eine Laserbearbeitung entfernt worden. Der unmittelbar oberhalb des Berührungssensors 28 und in dessen unmittelbarer Umgebung liegende Bereich 38 der Beschichtung 24 ist daher elektrisch von den anderen Teilen isoliert und nicht elektrisch leitend mit anderen Teilen der metallischen Beschichtung 24 verbunden. Eine Breite des Spalts, der die Unterbrechung 30 bildet, liegt im Bereich von weniger als 0,2 mm, so dass die Unterbrechung 30 von der Sichtseite der Trägerplatte 10 aus allenfalls als sehr dünne Linie sichtbar ist, während die Abdeckplatte im Übrigen im Bereich des Berührungssensors 28 eine durchgängige, metallisch erscheinende Oberfläche hat.

Die metallischen Schichten 22a, 22b sind semitransparent, so dass die gesamte Fläche der Abdeckplatte einen teilweise transparenten Bereich 40 bildet.

Durch die geringe Dicke der metallischen Schichten 22a, 22b ist einerseits eine hinreichende Transparenz gewährleistet, so dass das Licht der Leuchtdiode 20 durch die Beschichtung 24 hindurch scheinen kann. Andererseits reflektieren die metallische Schicht 22a, 22b das durch die Trägerplatte 10 einfallende Licht derart, dass bei inaktiver Leuchtdiode 20 nur die durchgehende Schicht 22 erkennbar ist. Die Abdeckplatte wirkt demnach wie ein semitransparenter Spiegel.

Die Anteile des Lichts, die von der hinteren metallischen Schicht 22b reflektiert werden, interferieren mit den Anteilen des Lichts, die von der vorderen metallischen Schicht 22a reflektiert werden. Diese Interferenzen führen zu einer interessant schillernden Oberfläche.

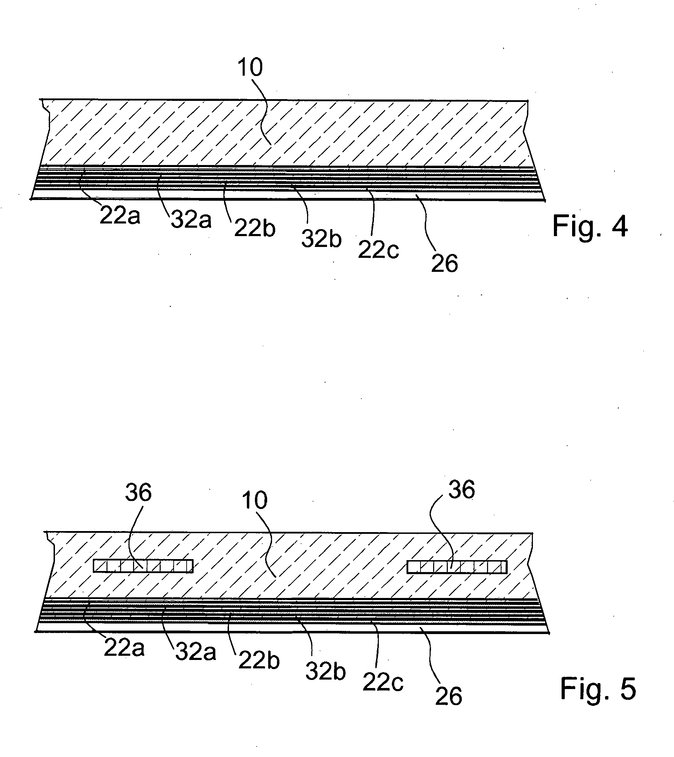

Fig. 4 zeigt eine Schnittdarstellung einer erfindungsgemäßen Hausgeräte-Abdeckplatte nach einer alternativen Ausgestaltung der Erfindung, in welche die Beschichtung 24 drei metallische Schichten 22a, 22b, 22c umfasst. Die verschiedenen Schichten 22a bis 22c sind durch dielektrische Trennschichten 32a, 32b voneinander getrennt und die äußere metallische Schicht 22c ist von einer Schutzschicht 26 umgeben. Die dielektrischen Trennschichten 32a, 32b haben eine Schichtdicke, die zu gewollten und kontrollierten Interferenzen zwischen den von einer oberen Schicht 22a reflektierten Anteil des durch die Trägerplatte 10 einfallenden Lichts einerseits und den von einer unteren Schicht 22b, 22c reflektierten Anteilen des Lichts andererseits führt. Dadurch kann eine metallisch schillernde, irisierende Oberfläche erreicht werden.

Beispiele für mögliche Schichtfolgen sind Glas, Eisen bzw. Stahl und Titannitrid zum Herstellen einer stahlartigen Farbe, Glas, Siliciumdioxid, Kupfer, Siliciumdioxid, Eisen (Stahl) und Siliciumdioxid für einen roten Schimmer, Glas, Siliciumdioxid, eine Silicium-Aluminiumlegierung (SiAl), Siliciumdioxid, Eisen (Stahl) und Siliciumdioxid für eine gelbe Farbe sowie Glas, Siliciumdioxid, Eisen (Stahl), Siliciumdioxid, Eisen (Stahl) und Siliciumdioxid in unterschiedlichen Schichtdicken für eine bläuliche oder gräuliche Farbgebung.

Die Schutzschicht 26 aus Titannitrid ist besonders robust. Die Schutzschicht 26 dient unter anderem der Vermeidung einer Oxidation der metallischen Schicht 22 bei hohen Temperaturen.

In die unterschiedlichen metallischen Schichten 22a bis 22c können mit Hilfe eines Lasers elektrische Schaltkreise eingraviert werden und die metallischen Schichten 22a bis 22c können mit hier nicht dargestellten Kontaktelementen versehen werden, um die metallischen Schichten 22a bis 22c als Leiter zum Übertragen von Steuersignalen oder dergleichen verwenden zu können.

In den oben beschriebenen Ausführungsbeispielen können die Trennschichten 32, 32a, 32b aus Oxiden von Zinn, Zink, Titan, Aluminium, Silizium, Tantal, Niob, Nickel, Chrom oder Mischungen daraus und/oder aus Nitriden von Titan, Silizium, Aluminium, Nickel, Chrom oder Mischungen daraus hergestellt werden.

Fig. 5 zeigt ein weiteres alternatives Ausführungsbeispiel der Erfindung, in welchem die Trägerplatte 10 und die Beschichtung 24 mit Laser-Innengravuren 36 ausgestattet sind.

### Bezugszeichen

- 10: Trägerplatte
- 12: Markierungen
- 14a: Heizzone
- 14b: Heizzone
- 14c: Heizzone
- 14d: Heizzone
- 16: Benutzerschnittstelle
- 18: Anzeigeelement
- 20: Leuchtdiode
- 22a: Schicht
- 22b: Schicht
- 22c: Schicht
- 24: Beschichtung
- 26: Schutzschicht
- 28: Berührungssensor
- 30: Unterbrechung
- 32: Trennschicht
- 32a: Trennschicht
- 32b: Trennschicht
- 36: Laser-Innengravur
- 38: Bereich
- 40: Bereich
- D: Dicke

## Patentansprüche

1. Haushaltsgeräte-Abdeckplatte mit einer Trägerplatte (10) aus Glas oder Glaskeramik mit wenigstens einem zumindest teilweise transparenten Bereich (40) zum Abdecken eines Anzeigeelements (18) sowie mit einer Beschichtung (24), wobei die Beschichtung (24) zumindest eine semitransparente metallische Schicht (22a) mit einer Schichtdicke zwischen 10 nm und 50 nm und zumindest eine weitere metallische Schicht (22a - 22c) umfasst, die durch eine dielektrische Trennschicht (32, 32a, 32b) von der semitransparenten metallischen Schicht (22a) getrennt ist, **dadurch gekennzeichnet, dass** wenigstens eine der metallischen Schichten (22a - 22c) in der Umgebung eines Bereichs (38) zur Abdeckung eines Berührungssensors eine Unterbrechung (30) zur elektrischen Isolation des Bereichs (38) aufweiset, wobei der Bereich (38) unmittelbar oberhalb des Berührungssensors (28) und in dessen unmittelbarer Umgebung liegt.

2. Haushaltsgeräte-Abdeckplatte nach Anspruch 1, **dadurch gekennzeichnet, dass** die semitransparente metallische Schicht (22) auf eine dem Anzeigeelement (18) zugewandte Rückseite der Trägerplatte (10) aufgebracht ist.

3. Hausgeräte-Abdeckplatte nach einem der vorhergehenden Ansprüche, **gekennzeichnet durch** wenigstens zwei zumindest teilweise transparente metallische Schichten (22a - 22c), die **durch** eine dielektrische Trennschicht (32, 32a, 32b) getrennt sind.

4. Hausgeräte-Abdeckplatte nach Anspruch 3, **dadurch gekennzeichnet, dass** die Dicke (D) der dielektrischen Schicht zwischen den wenigstens zwei metallischen Schichten (22a - 22c) zwischen 5 nm und 500 nm liegt.

5. Hausgeräte-Abdeckplatte nach einem der vorhergehenden Ansprüche, **dadurch gekennzeichnet, dass** die Unterbrechung (30) durch Einritzen der metallischen Schicht (22) hergestellt ist.

6. Hausgeräte-Abdeckplatte nach einem der vorhergehenden Ansprüche, **gekennzeichnet durch** eine zumindest in Teilbereichen auf die Trägerplatte (10) aufgedruckte Markierung (12).

7. Hausgeräte-Abdeckplatte nach Anspruch 6, **dadurch gekennzeichnet, dass** zumindest eine der metallischen Schichten (22a - 22c) nach dem Aufdrucken der Markierung (12) auf die Trägerplatte (10) aufgebracht ist.

8. Hausgeräte-Abdeckplatte nach einem der vorhergehenden Ansprüche, **gekennzeichnet durch** wenigstens eine mit zumindest einer der metallischen Schichten (22a - 22c) verbundene Kontaktelektrode zum Einspeisen von Steuersignalen in die metallische Schicht (22).

9. Hausgeräte-Abdeckplatte nach einem der vorhergehenden Ansprüche, **dadurch gekennzeichnet, dass** zumindest eine der metallischen Schichten (22a - 22c) in einem PVD-Sputterverfahren auf die Trägerplatte (10) aufgebracht ist.

10. Hausgeräte-Abdeckplatte nach einem der vorhergehenden Ansprüche, **dadurch gekennzeichnet, dass** eine äußere metallische Schicht (22c) von einer dielektrischen Schutzschicht (26) bedeckt ist.

11. Hausgeräte-Abdeckplatte nach einem der vorhergehenden Ansprüche, **dadurch gekennzeichnet, dass** zumindest eine der metallischen Schichten (22a - 22c) aus einem Material hergestellt ist, welches aus der Gruppe, die aus Silber (Ag), Gold (Au), Aluminium (Al), Molybdän(Mo), Kupfer (Cu), Nickel (Ni), Silizium (Si), Edelstahl (SSt), Titan (Ti), Niob (Nb), Tantal (Ta), Wolfram (W), Palladium oder einer Legierung oder Mischung aus zwei oder mehreren dieser Metalle besteht, ausgewählt ist.

12. Hausgeräte-Abdeckplatte nach einem der vorhergehenden Ansprüche, **dadurch gekennzeichnet dass** das Material wenigstens eine der dielektrischen Trennschichten (32, 32a, 32b)
- Oxide, welche aus der Gruppe, die aus Zinnoxiden, Zinkoxiden, Aluminiumoxiden, Titanoxiden, Siliziumoxiden, Nickeloxiden, Chromoxiden, Nioboxiden, Tantaloxiden oder Mischungen davon besteht, ausgewählt sind, und/oder
- Nitride aus metallischen Elementen, welche aus der Gruppe, die aus Siliziumnitriden, Titannitdriden, Chromnitriden und Aluminiumnitriden oder Mischungen davon besteht, ausgewählt sind,
umfasst.

13. Hausgeräte-Abdeckplatte nach einem der vorhergehenden Ansprüche, **dadurch gekennzeichnet, dass** die Trägerplatte (10) wenigstens eine Markierung in der Form einer Laser-Innengravur (36) umfasst.

14. Verfahren zum Herstellen einer Haushaltsgeräte-Abdeckplatte mit einer Trägerplatte (10) aus Glas oder Glaskeramik mit wenigstens einem zumindest teilweise transparenten Bereich (40) zum Abdecken eines Anzeigeelements (18) sowie mit einer Beschichtung (24), wobei die Beschichtung (24) mit zumindest einer semitransparenten metallischen Schicht (22a) mit einer Schichtdicke zwischen 10 nm und 50 nm und zumindest mit einer weiteren metallischen Schicht (22a - 22c) ausgebildet wird, die durch eine dielektrische Trennschicht (32, 32a, 32b) von der semitransparenten metallischen Schicht (22a) getrennt wird, **dadurch gekennzeichnet, dass** wenigstens eine der metallischen Schichten (22a - 22c) in der Umgebung eines Bereichs (38) zur Abdeckung eines Berührungssensors (28) mit einer Unterbrechung (30) zur elektrischen Isolation des Bereichs (38) ausgebildet wird, wobei der Bereich (38) unmittelbar oberhalb des Berührungssensors (28) und in dessen unmittelbarer Umgebung liegt.

## Claims

1. Domestic appliance cover plate having a support plate (10) made of glass or glass ceramic with at least one at least partially transparent region (40) for covering a display element (18) and with a coating (24), wherein the coating (24) comprises at least one semi-transparent metallic layer (22a) with a layer thickness between 10 nm and 50 nm and at least one further metallic layer (22a - 22c), which is separated from the semi-transparent metallic layer (22a) by a dielectric separation layer (32, 32a, 32b), **characterised in that** at least one of the metallic layers (22a - 22c) features a break (30) in proximity to a region (38) for covering a touch sensor for the electrical isolation of the region (38), wherein the region (38) lies directly above the touch sensor (28) and in its immediate vicinity.

2. Domestic appliance cover plate according to claim 1, **characterised in that** the semi-transparent metallic layer (22) is applied to a rear face of the support plate (10) facing the display element (18).

3. Domestic appliance cover plate according to one of the preceding claims, **characterised by** at least-two at least partially transparent metallic layers (22a - 22c), which are separated by a dielectric separation layer (32, 32a, 32b).

4. Domestic appliance cover plate according to claim 3, **characterised in that** the thickness (D) of the dielectric layer between the at least two metallic layers (22a - 22c) is between 5 nm and 500 nm.

5. Domestic appliance cover plate according to one of the preceding claims, **characterised in that** the break (30) is produced by cutting into the metallic layer (22).

6. Domestic appliance cover plate according to one of the preceding claims, **characterised by** a marking (12) printed on at least parts of the support plate (10).

7. Domestic appliance cover plate according to claim 6, **characterised in that** at least one of the metallic layers (22a - 22c) is applied to the support plate (10) after the marking (12) has been printed on.

8. Domestic appliance cover plate according to one of the preceding claims, **characterised by** at least one contact electrode connected to at least one of the metallic layers (22a - 22c) to feed control signals into the metallic layer (22).

9. Domestic appliance cover plate according to one of the preceding claims, **characterised in that** at least one of the metallic layers (22a - 22c) is applied to the support plate (10) using a PVD sputter procedure.

10. Domestic appliance cover plate according to one of the preceding claims, **characterised in that** an outer metallic layer (22c) is covered by a dielectric protective layer (26).

11. Domestic appliance cover plate according to one of the preceding claims, **characterised in that** at, least one of the metallic layers (22a - 22c) is made from a material selected from the group consisting of silver (Ag), gold (Au), aluminium (Al), molybdenum (Mo), copper (Cu), nickel (Ni), silicon (Si), stainless steel (SSt), titanium (Ti), niobium (Nb), tantalum (Ta), tungsten (W), palladium or an alloy or mixture of two or more of these metals.

12. Domestic appliance cover plate according to one of the preceding claims, **characterised in that** the material of at least one of the dielectric separation layers (32, 32a, 32b) comprises
- oxides selected from the group consisting of stannic oxides, zinc oxides, aluminium oxides, titanium oxides, silicon oxides, nickel oxides, chromium oxides, niobium oxides, tantalum oxides or mixtures thereof and/or
- nitrides of metallic elements selected from the group consisting of silicon nitrides, titanium nitrides, chromium nitrides and aluminium nitrides or mixtures thereof.

13. Domestic appliance cover plate according to one of the preceding claims, **characterised in that** the support plate (10) comprises at least one marking in the form of an internal laser engraving (36).

14. Method for producing a domestic appliance cover plate having a support plate (10) made of glass or glass ceramic with at least one at least partially transparent region (40) for covering a display element (18) and with a coating (24), wherein the coating (24) is embodied with at least one semi-transparent metallic layer (22a) having a layer thickness between 10 nm and 50 nm and at least one further metallic layer (22a - 22c), which is separated from the semi-transparent metallic layer (22a) by a dielectric separation layer (32, 32a, 32b),
**characterised in that** at least one of the metallic layers (22a - 22c) is embodied with a break (30) in proximity to a region (38) for covering a touch sensor (28) for the electrical isolation of the region (38), wherein the region (38) lies directly above the touch sensor (28) and in its immediate vicinity.

## Revendications

1. Plaque de recouvrement d'appareil ménager comprenant une plaque de support (10) en verre ou en vitrocéramique munie au moins d'une zone transparente (40) au moins en partie, destinée à recouvrir un élément d'affichage (18) et munie d'un revêtement (24), le revêtement (24) comprenant au moins une couche métallique semi-transparente (22a) ayant une épaisseur de couche comprise entre 10 nm et 50 nm et comprenant au moins une couche métallique supplémentaire (22a - 22c) qui est séparée de la couche métallique semi-transparente (22a) par une couche de séparation diélectrique (32, 32a, 32b), **caractérisée en ce qu'**au moins une des couches métalliques (22a - 22c) présente, dans les environs d'une zone (38) destinée à recouvrir un capteur tactile, une interruption (30) pour l'isolation électrique de la zone (38), la zone (38) étant située directement au-dessus du capteur tactile (28) et dans les environs directs de celui-ci.

2. Plaque de recouvrement d'appareil ménager selon la revendication 1, **caractérisée en ce que** la couche métallique semi-transparente (22) est appliquée sur un côté arrière de la plaque de support (10), tourné vers l'élément d'affichage (18).

3. Plaque de recouvrement d'appareil ménager selon l'une quelconque des revendications précédentes, **caractérisée par** au moins deux couches métalliques (22a - 22c) transparentes au moins en partie, lesquelles sont séparées par une couche de séparation diélectrique (32, 32a, 32b).

4. Plaque de recouvrement d'appareil ménager selon la revendication 3, **caractérisée en ce que** l'épaisseur (D) de la couche diélectrique entre les au moins deux couches métalliques (22a - 22c) est située entre 5 nm et 500 nm.

5. Plaque de recouvrement d'appareil ménager selon l'une quelconque des revendications précédentes, **caractérisée en ce que** l'interruption (30) est fabriquée en rayant la couche métallique (22).

6. Plaque de recouvrement d'appareil ménager selon l'une quelconque des revendications précédentes, **caractérisée par** un marquage (12) imprimée sur la plaque de support (10) au moins dans des zones partielles.

7. Plaque de recouvrement d'appareil ménager selon la revendication 6, **caractérisée en ce qu'**au moins une des couches métalliques (22a - 22c) est appliquée sur la plaque de support (10) après l'impression du marquage (12).

8. Plaque de recouvrement d'appareil ménager selon l'une quelconque des revendications précédentes, **caractérisée par** au moins une électrode de contact reliée à au moins une des couches métalliques (22a - 22c) pour fournir des signaux de commande dans la couche métallique (22).

9. Plaque de recouvrement d'appareil ménager selon l'une quelconque des revendications précédentes, **caractérisée en ce qu'**au moins une des couches métalliques (22a-22c) est appliquée sur la plaque de support (10) dans un procédé de couchage par métal dur.

10. Plaque de recouvrement d'appareil ménager selon l'une quelconque des revendications précédentes, **caractérisée en ce qu'**une couche métallique extérieure (22c) est recouverte par une couche de protection diélectrique (26).

11. Plaque de recouvrement d'appareil ménager selon l'une quelconque des revendications précédentes, **caractérisée en ce qu'**au moins une des couches métalliques (22a - 22c) est fabriquée dans une matière, laquelle est sélectionnée à partir du groupe qui est constitué d'argent (Ag), d'or (Au), d'aluminium (Al), de molybdène (Mo), de cuivre (Cu), de nickel (Ni), de silice (Si), d'acier inoxydable (SSt), de titane (Ti), de niobium (Nb), de tantale (Ta), de wolfram (W), de palladium ou d'un alliage ou d'un mélange constitué de deux ou de plusieurs de ces métaux.

12. Plaque de recouvrement d'appareil ménager selon l'une quelconque des revendications précédentes, **caractérisée en ce que** la matière au moins de l'une des couches de séparation diélectriques (32, 32a, 32b) comprend
- de l'oxyde qui est sélectionné à partir du groupe constitué d'oxydes stanniques, d'oxydes de zinc, d'oxydes d'aluminium, d'oxydes de titane, d'oxydes de silice, d'oxydes de nickel, d'oxydes de chrome, d'oxydes de niobium, d'oxydes de tantale ou de mélanges de ces substances, et/ou
- des nitrites à partir d'éléments métalliques sélectionnés à partir du groupe constitué de nitrites de silice, de nitrites de titane, de nitrites de chrome et de nitrites d'aluminium ou de mélanges de ces substances.

13. Plaque de recouvrement d'appareil ménager selon l'une quelconque des revendications précédentes, **caractérisée en ce que** la plaque de support (10) comprend au moins un marquage sous forme d'une gravure laser intérieure (36).

14. Procédé de fabrication d'une plaque de recouvrement d'appareil ménager comprenant une plaque de support (10) en verre ou en vitrocéramique munie au moins d'une zone transparente (40) au moins en partie, destinée à recouvrir un élément d'affichage (18) et munie d'un revêtement (24), le revêtement (24) étant réalisé par au moins une couche métallique semi-transparente (22a) ayant une épaisseur de couche comprise entre 10 nm et 50 nm et au moins par une couche métallique supplémentaire (22a - 22c) qui est séparée de la couche métallique semi-transparente (22a) par une couche de séparation diélectrique (32, 32a, 32b), **caractérisé en ce qu'**au moins une des couches métalliques (22a - 22c) est réalisée, dans les environs d'une zone (38) destinée à recouvrir un capteur tactile (28), avec une interruption (30) pour l'isolation électrique de la zone (38), la zone (38) étant située directement au-dessus du capteur tactile (28) et dans les environs directs de celui-ci.
